# EUROPÄISCHE PATENTSCHRIFT

(11) **EP 3 115 283 B1**
(45) Veröffentlichungstag und Bekanntmachung des Hinweises auf die Patenterteilung: **29.11.2017**
(21) Anmeldenummer: 16178229.7
(22) Anmeldetag: 06.07.2016
(51) Int. Cl.: B62D 51/02, B62B 5/08, B62D 51/04, B66F 9/075, B62D 33/06

(54) **STANDPLATTFORM FÜR EIN FLURFÖRDERZEUG**
OPERATOR'S PLATFORM FOR AN INDUSTRIAL TRUCK
PLATEFORME D'OPERATEUR POUR UN CHARIOT DE MANUTENTION

(30) Priorität: 10.07.2015 DE 102015111178
(43) Veröffentlichungstag der Anmeldung: 11.01.2017
(73) Patentinhaber: Jungheinrich Aktiengesellschaft, 22047 Hamburg (DE)
(72) Erfinder: Hohmann, Michael, 04277 Leipzig (DE); Schladebach, Frank, 06632 Gröst (DE)
(74) Vertreter: Hauck Patentanwaltspartnerschaft mbB

(56) Entgegenhaltungen:
- EP-A1- 2 336 009
- EP-A1- 2 360 083
- DE-A1-102005 045 505
- DE-A1-102006 009 331
- DE-T2- 60 117 956
- JP-A- 2002 145 128

## Beschreibung

Die Erfindung bezieht sich auf eine Standplattform für ein Flurförderzeug.

Standplattformen für Flurförderzeuge sind üblicherweise federnd ausgeführt. Dies gewährleistet, dass während des Fahrens auf den Hubwagen wirkende Stöße nur gedämpft auf die Bedienungsperson übertragen werden. Die Federung der Standplattform ist üblicherweise dadurch bewerkstelligt, dass zwischen der Standplattform und einem Rahmenbauteil des Hubwagens mindestens ein Dämpfungselement angebracht ist. Darüber hinaus ist es bekannt, Standplattformen mit einem Anwesenheitssensor für eine Bedienungsperson auszurüsten.

Aus DE 10 2006 009 331 A1 ist bekannt geworden, eine gelenkig gelagerte Plattform durch eine Feder vorzuspannen. Die Feder stützt sich auf einem Pufferelement ab. Außerdem ist zwischen der Plattform und dem Rahmen ein Positionssensor angeordnet. Der Positionssensor wird aktiviert, wenn durch Gewichtskraft die Standplattform heruntergeschwenkt wird gegen das Pufferelement.

Aus DE 10 2005 045 505 A1 ist eine Standplattform bekannt geworden, bei der die Standplattform durch eine Federanordnung vorgespannt ist. Die Federanordnung besteht aus einem elastomeren, konischen Pufferelement, das von einer Schraubenfeder umgeben ist, die die Standplattform vorspannt. Bei Gewichtskraft wird zunächst die Schraubenfeder verformt, bis die Plattform an dem Pufferelement anliegt. Diese Bewegung wird von einem Näherungssensor erfasst.

Aus EP 2 336 009 B1 ist eine klappbare Standplattform bekannt geworden, die im Mitgehbetrieb des Flurförderzeugs gegen die Rückwand des Fahrzeugs hochgeklappt ist und bei Bedarf im Mitfahrbetrieb heruntergeklappt wird. Die klappbare Plattform ist um eine horizontale Achse schwenkbar und weist auf der gegenüberliegenden Seite der Achse Zapfen auf, die gegen eine Federanordnung anliegen. Bei Belastung wird die Federanordnung verformt und sorgt dabei für eine Dämpfung der Plattform beim Überfahren von Unebenheiten und Hindernissen. Aus der EP 2360083 ist eine Dämpfung für eine Plattform bekannt, die bestimmte Lasten, die bestimmte Lasten unter Transportbedingungen gefedert führt. Die EP2360083 zeigt einen Positions- oder Lastsensor der die geklappte Positionierung der Plattform oder Last durch eine Person auf der Plattform feststellt,- wobei zwei Spiralfedern parallel angeordnet sind, die die Abwärtsbewegungen der Plattform bei der Fahrt dämpfen. Der Erfindung liegt die Aufgabe zugrunde, für eine klappbare Plattform eine wirksame Dämpfung zu schaffen, die zugleich bei einer relativ geringen Gewichtskraft das Ansprechen eines Sensors ermöglicht.

Diese Aufgabe wird durch die Merkmale des Patentanspruchs 1 gelöst.

Bei der Erfindung ist die Plattform - in bekannter Weise - um eine horizontale Achse klappbar und mit einem auf der gegenüberliegenden Seite der Achse liegenden Hebelarm versehen, der von unten gegen die Federanordnung anliegt, die ihrerseits am Rahmen des Flurförderzeugs abgestützt ist. Der Hebelarm ist somit auf der der Plattform gegenüberliegenden Seite der Achse angeordnet. Der erste Federabschnitt ist zwischen einer Aufnahme für den ersten Federabschnitt und einem Distanzelement angeordnet, das seinerseits auf den zweiten Federabschnitt wirkt, wenn der erste Federabschnitt bei Belastung der Plattform zuerst verformt wird. Der erste Federabschnitt hat eine relativ weiche Kennlinie, wodurch er bei gleicher Belastung eine größere Längenänderung als der zweite Federabschnitt erfährt. Die Deformation des ersten Federabschnitts ist durch das Distanzelement begrenzt. Danach erfolgt die weitere Federwirkung über den zweiten Federabschnitt. Würde letzterer allein verwendet werden, müsste die Federkennlinie entsprechend der Belastung im Fahrbetrieb ausgelegt werden, so dass z.B. bei einer Belastung von 10 kg nur ein geringer Weg zurückgelegt wird. Diese Belastung soll jedoch bereits ein Freigabesignal erzeugen. Durch die Integration eines ersten Federabschnitts mit einer weichen Kennlinie kann deren Federkennlinie so gewählt werden, dass bei einer relativ geringen Belastung der Plattform von 10 kg bis 15 kg das Distanzelement bereits am zweiten Federelement anliegt und letzteres aktiv wird. Dieses ist dann so ausgelegt, dass z.B. eine Person von 120 kg komfortabel über ein Hindernis fahren kann.

Nach einer Ausgestaltung der Erfindung misst der Sensor eine Position des Hebelarms, z.B. mit Hilfe eines elektrischen oder magnetischen Sensors. Die Sensoren können nach einer Ausgestaltung der Erfindung auch in die Federanordnung integriert sein. Eine andere Möglichkeit besteht erfindungsgemäß darin, die Positionsveränderung des Hebelarms mit Hilfe eines Mikroschalters zu erfassen.

Nach einer weiteren Ausgestaltung der Erfindung ist der erste Federabschnitt ein Federring, der in einer Ausnehmung eines Distanzrings angeordnet ist und im unbelasteten Zustand über die zugeordnete, z.B. obere Fläche des Distanzrings hinaussteht und der Distanzring am zweiten Federabschnitt anliegt. Federring, Distanzring und teilweise zylindrischer, zweiter Federabschnitt sind vorzugsweise in einer hohlzylindrischen Federaufnahme angeordnet.

Nach einer weiteren Ausgestaltung der Erfindung sind erster und/oder zweiter Federabschnitt von einem Elastomer gebildet.

Im Falle eines Distanzrings kann der elektrische oder magnetische Sensor oder auch der Mikroschalter in den Distanzring integriert sein.

Ein Ausführungsbeispiel der Erfindung wird nachfolgend anhand von Zeichnungen näher erläutert.
- Fig. 1: zeigt äußerst schematisch die Seitenansicht eines Flurförderzeugs mit klappbarer Standplattform.
- Fig. 2: zeigt vergrößert die Standplattform nach Fig. 1 mit einer Federanordnung nach der Erfindung.

- Fig. 3: zeigt den Hebelarm der Plattform nach Fig. 2 mit einem Positionssensor.
- Fig. 4: zeigt perspektivisch eine Federanordnung nach der Erfindung.

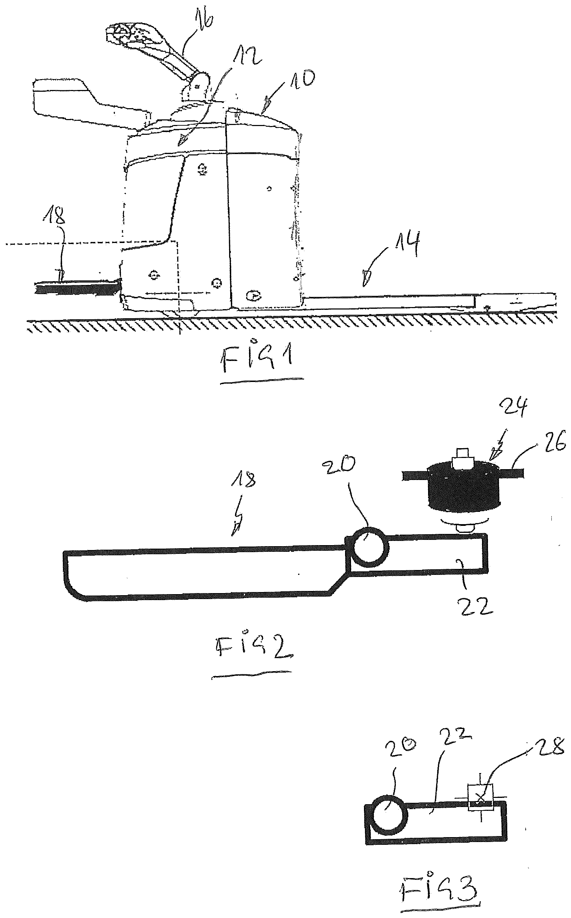

In der Fig. 1 ist schematisch ein Flurförderzeug 10 dargestellt mit Antriebsteil 12 und Lastteil 14. Auf dem Antriebsteil ist eine Deichsel 16 gelagert. Im hinteren Ende ist eine Standplattform 18 um eine horizontale Achse drehbar gelagert. In Fig. 1 ist sie in der heruntergeklappten Position gezeigt und kann daher einen Mitfahrbetrieb ermöglichen. Im Mitgehbetrieb wird die Plattform gegen die Rückwand des Flurförderzeugs 10 hochgeklappt. In Fig. 2 ist die Standplattform 18 schematisch dargestellt. Die horizontale Schwenkachse ist bei 20 angedeutet. Man erkennt, dass auf der der Plattform 18 gegenüberliegenden Seite der Achse 20 ein Hebelarm 22 angeordnet ist, der von unten gegen eine Federanordnung 24 anliegt, die, wie bei 26 zu erkennen ist, am Rahmen des Flurförderzeugs 10 gelagert ist. Die Federanordnung 24 dämpft die Stöße, wenn eine Bedienperson auf der Plattform 18 steht. Außerdem ist der Federanordnung 24 ein Freigabesensor zugeordnet, der ein Signal abgibt, wenn die Plattform 18 mit einer Gewichtskraft belastet ist, beispielsweise 10 kg bis 15 kg, also einer Belastung, die weit unter der Gewichtskraft einer Bedienperson liegt.

Ein solcher Sensor ist z.B. in Fig. 3 angebracht und mit 28 bezeichnet. Er kann elektronisch oder magnetisch wirkend oder auch als Mikroschalter ausgebildet sein. Er ist mit der Steuerschaltung des Flurförderzeugs 10 verbunden, die ein in Betriebsetzen des Fahrzeugs erst zulässt, wenn ein Freigabesignal vom Sensor 28 gesendet wird.

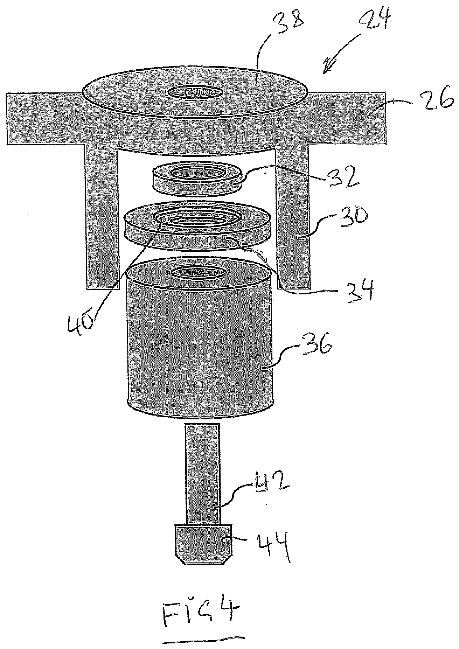

In einer Aufnahme 30 mit hohlzylindrischem Innenraum sind eine Ringfeder 32, ein Distanzring 34 und in zylindrisches Pufferelement 36 aufgenommen. In Fig. 4 sind diese Teile in auseinandergezogener Darstellung gezeigt. Im eingebauten Zustand liegt der Distanzring 34 an einem Deckenabschnitt 38 der Aufnahme 30 an. Der Federring 32 sitzt in einer kreisförmigen Ausnehmung 40, wobei seine Höhe jedoch größer ist als die Tiefe der Ausnehmung 40, wenn der Federring 32 im entspannten Zustand ist. Der Distanzring 34 stützt sich auf dem zylindrischen Pufferelement 36 ab. Durch Deckenabschnitt 38, Federring 32, Distanzring 34 und Pufferelement 36 erstreckt sich der Schaft eines Führungsstiftes 42, dessen Kopf 44 an der Unterseite des Pufferelements 36 anliegt.

Distanzring 34 und Pufferelement 36 sind in der Aufnahme 30 vertikal geführt.

Die Federkennlinie des Federrings 32, der z.B. aus einem Elastomer geformt ist, ist relativ weich. Bei einer Gewichtslast von z.B. 10 kg bis 15 kg auf die Plattform 18 verformt sich der Federring so weit, dass er in der Ausnehmung 40 verschwindet und der Distanzring 34 an der Abdeckung 38 anliegt. Eine weitere Belastung, etwa durch die Gewichtslast einer Bedienperson von z.B. 120 kg, wird dann vom Distanzring 34 unmittelbar auf das Pufferelement 36 übertragen, das seinerseits aus einem Elastomer besteht. Bei einer kleinen Gewichtskraft, die zu einer Verformung des Federrings 32 führt, ist die Verformung des Pufferelements 36 vernachlässigbar.

Der Verformweg des Federrings 32 wird nun einem geeigneten Sensor erfasst. Dies geschieht wie z.B. anhand von Fig. 3 dargestellt. Es ist jedoch auch möglich, einen Sensor in die Federanordnung nach Fig. 4 zu integrieren, z.B. durch Einbau eines elektronischen oder induktiven Sensors in den Distanzring 34 oder durch Integration eines Mikroschalters in den Distanzring 34.

## Patentansprüche

1. Standplattform für ein Flurförderzeug mit einer Federanordnung, gegen die die Plattform anliegt, wenn die Plattform durch eine Gewichtskraft belastet ist, wobei ein bei Belastung erster Federabschnitt mit einer weicheren Kennlinie zunächst verformt wird und nach einem vorgegebenen Federweg des ersten Federabschnitts ein zweiter Federabschnitt mit einer härteren Federkennlinie verformbar ist und einem Sensor, der die Verformung des ersten Federabschnitts erfasst zur Erzeugung eines Freigabesignals für das Flurförderzeug, **dadurch gekennzeichnet, dass** die Plattform (18) um eine horizontale Achse (20) klappbar ist und einen Hebelarm (22) aufweist, der auf einer der Plattform gegenüberliegenden Seite der Achse (20) angeordnet ist und von unten gegen die Federanordnung (24) anliegt, die ihrerseits am Rahmen (26) des Flurförderzeugs abgestützt ist, wobei der erste Federabschnitt (32) zwischen einer Aufnahme für den ersten Federabschnitt (32) und einem Distanzelement angeordnet ist, das sich seinerseits auf dem zweiten Federabschnitt (36) abstützt, wobei das Distanzelement auf den zweiten Federabschnitt wirkt, wenn der erste Federabschnitt bei Belastung der Plattform (18) zuerst verformt wird.

2. Standplattform nach Anspruch 1, **dadurch gekennzeichnet, dass** der Sensor (28) eine Position des Hebelarms (22) misst.

3. Standplattform nach Anspruch 1 oder 2, **dadurch gekennzeichnet, dass** der Sensor in die Federanordnung (24) integriert ist.

4. Standplattform nach einem der Ansprüche 1 bis 3, **dadurch gekennzeichnet, dass** der erste Federabschnitt (32) ein Federring ist, der in einer Ausnehmung (40) eines Distanzrings (34) angeordnet ist und im unbelasteten Zustand über die zugeordnete Fläche des Distanzrings hinaussteht und der Distanzring an dem zweiten Federabschnitt (36) anliegt.

5. Standplattform nach Anspruch 4, **dadurch gekennzeichnet, dass** Federring, Distanzring und teilweise zylinderförmiger zweiter Federabschnitt (36) in einer hohlzylindrischen Federaufnahme (30) angeordnet sind.

6. Standplattform nach einem der Ansprüche 1 bis 5, **dadurch gekennzeichnet, dass** erster und/oder zweiter Federabschnitt (32, 36) von einem Elastomer gebildet sind.

7. Standplattform nach einem der Ansprüche 1 bis 6, **dadurch gekennzeichnet**, das der Sensor (28) als ein elektrischer oder magnetischer Sensor ausgebildet ist und in die Federanordnung (24) integriert ist.

8. Standplattform nach einem der Ansprüche 1 bis 6, **dadurch gekennzeichnet, dass** ein Mikroschalter in die Federanordnung integriert ist.

9. Standplattform Nach Anspruch 4 und 8, **dadurch gekennzeichnet, dass** der Mikroschalter in den Distanzring (34) integriert ist.

## Claims

1. A standing platform for an industrial truck comprising a spring arrangement which the platform abuts when the platform is subject to a weight, wherein a first spring section with a soft characteristic is initially deformed under a load, and after a predetermined spring path of the first spring section, a second spring section with a harder spring characteristic is deformable, and comprising a sensor that detects the deformation of the first spring section for generating a release signal for the industrial truck, **characterized in that** the platform (18) can be folded on a horizontal shaft (20) and has a lever arm (22) that is arranged on the side of the shaft (20) opposite the platform, and abuts the spring arrangement (24) from below which in turn is supported on the frame (26) of the industrial truck, wherein the first spring section (32) being arranged between a seat for the first spring section (32) and a spacer that in turn is supported on the second spring section (36), wherein the spacer acts on the second spring section when the first spring section is initially deformed under a load upon the platform (18).

2. The standing platform according to claim 1, **characterized in that** the sensor (28) measures a position of the lever arm (22).

3. The standing platform according to claim 1 or 2, **characterized in that** the sensor is integrated in the spring arrangement (24).

4. The standing platform according to one of claims 1 to 3, **characterized in that** the first spring section (32) is a spring ring that is arranged in a recess (40) of a spacer ring (34) and, in an unloaded state, projects beyond the assigned surface of the spacer ring, and the spacer ring lies against the second spring section (36).

5. The standing platform according to claim 4, **characterized in that** the spring ring, spacer ring and part of the cylindrical second spring section (36) are arranged in a hollow cylindrical spring seat (30).

6. The standing platform according to one of claims 1 to 5, **characterized in that** the first and/or second spring section (32, 36) are formed by an elastomer.

7. The standing platform according to one of claims 1 to 6, **characterized in that** the sensor (28) is arranged as an electric or magnetic sensor and is integrated in the spring arrangement (24).

8. The standing platform according to one of claims 1 to 6, **characterized in that** a microswitch is integrated in the spring arrangement.

9. The standing platform according to claim 4 and 8, **characterized in that** the microswitch is integrated in the spacer ring (34).

## Revendications

1. Plateforme d'opérateur pour un chariot de manutention avec un mécanisme à ressort contre lequel la plateforme s'appuie quand la plateforme est chargée par une force de pesanteur, une première section de ressort avec une courbe caractéristique plus souple étant d'abord déformée lorsque elle est chargée, et une deuxième section de ressort avec une courbe caractéristique plus dure pouvant être déformée après une course de suspension de la première section de ressort prescrite, et avec un capteur qui détecte la déformation de la première section de ressort afin de générer un signale de libération pour le chariot de manutention, **caractérisé en ce que** la plateforme (18) peut être basculée autour d'un axe horizontal (20) et comporte un bras de levier (22) qui est arrangé dans un côté de l'axe (20) opposé à la plateforme et s'appuie de bas contre le mécanisme de ressort (24), qui est à son tour supporté dans le cadre (26) du chariot de manutention, la première section de ressort (32) étant arrangée entre un logement pour la première section de ressort (32) et un élément d'écartement qui est à son tour supporté par la deuxième section de ressort (36), l' élément d'écartement agissant sur la deuxième section de ressort quand la première section de ressort était d'abord déformée lorsqu'un chargement de la plateforme (18).

2. Plateforme d'opérateur selon la revendication 1, **caractérisée en ce que** le capteur (28) mesure une position du bras de levier (22).

3. Plateforme d'opérateur selon la revendication 1 ou 2, **caractérisée en ce que** le capteur est intégré dans le mécanisme de ressort (24).

4. Plateforme d'opérateur selon l'une quelconque des revendications 1 à 3, **caractérisée en ce que** la première section de ressort (32) est un anneau ressort, qui est arrangé dans un évidement (40) d'un anneau d'écartement (34) et fait saillie au-delà de la surface associée de l' anneau d'écartement, et que l' anneau d'écartement s'appuie contre la deuxième section de ressort (36).

5. Plateforme d'opérateur selon la revendication 4, **caractérisée en ce que** l'anneau ressort, l'anneau d'écartement et la deuxième section de ressort (36) partiellement cylindrique sont arrangés dans un logement de ressort (30) en forme de cylindre creux.

6. Plateforme d'opérateur selon l'une quelconque des revendications 1 à 5, **caractérisée en ce que** la première et/ou la deuxième section de ressort (32, 36) sont formées par un élastomère.

7. Plateforme d'opérateur selon l'une quelconque des revendications 1 à 6, **caractérisée en ce que** le capteur (28) est réalisé comme un capteur électrique ou magnétique et est intégré dans le mécanisme de ressort (24).

8. Plateforme d'opérateur selon l'une quelconque des revendications 1 à 6, **caractérisée en ce qu'**un micro-interrupteur est intégré dans le mécanisme de ressort.

9. Plateforme d'opérateur selon les revendications 4 et 8, **caractérisée en ce que** le micro-interrupteur est intégré dans l'anneau d'écartement (34).
